# EUROPEAN PATENT APPLICATION

(11) **EP 4 641 407 A1**
(43) Date of publication of application: **29.10.2025**
(21) Application number: 25156258.3
(22) Date of filing: 06.02.2025
(51) Int. Cl.: G06F 16/901, G06N 5/02, G06N 5/022

(54) **LOCAL KNOWLEDGE GRAPHS AND USE THEREOF**

(30) Priority: 26.04.2024 US 202418647650
(71) Applicant: SAP SE, 69190 Walldorf (DE)
(72) Inventor: Portisch, Jan, 69190 Walldorf (DE); Hladik, Michael, 69190 Walldorf (DE); Bracholdt, Sandra, 69190 Walldorf (DE)
(74) Representative: Müller-Boré & Partner Patentanwälte PartG mbB

(57) **Abstract**

The present disclosure provides techniques and solutions for linking elements of different knowledges graph and for using such links during knowledge graph processing. When an element of a knowledge graph is created, such as a class, a property, or a class instance, it can be determined whether a corresponding element exists in another knowledge graph. If so, the elements can be operatively linked. When a query is executed against a knowledge graph, if an element is linked to an element of another knowledge graph, the other knowledge graph can be accessed for query processing. When statements are made about a knowledge graph element that is defined in a first knowledge graph element and where the element is defined with respect to an element of a second knowledge graph, the scope of the statement can be limited to the second knowledge graph.

## Description

### FIELD

The present disclosure generally relates to establishing relationships between elements of knowledge graphs. Particular implementations relate to mapping elements of a local knowledge graph to elements of a source knowledge graph, which can be a core knowledge graph or another local knowledge graph.

### BACKGROUND

In contemporary data management and analysis, knowledge graphs provide foundational frameworks for organizing, representing, and exploiting structured knowledge from diverse data sources. Knowledge graphs encode information in a graph-based format, having nodes representing entities and edges denoting relationships between these entities. This structure facilitates interconnected data synthesis and exploration, allowing for advanced data analytics, natural language processing (NLP), and artificial intelligence (AI) applications.

Ontologies can serve as schemas for defining domain-specific concepts and relationships in a knowledge graph. Essentially, ontologies provide formalized representations of domain knowledge, capturing hierarchical classifications (classes) and semantic relationships (properties) between entities. Through ontologies, knowledge graphs gain semantic richness and coherence, enabling more precise querying and inference over interconnected data. Statements about concepts, whether they be classes or instances, can be expressed, such as using RDF triples. RDF triples are formed as subject-predicate-object triples, where the subject denotes the entity or instance, the predicate represents the relationship or property, and the object signifies either another entity or a literal value.

The integration of ontologies with knowledge graphs enhances their expressiveness and interoperability across technical domains. For instance, in the context of a semantic web application, an ontology defining concepts related to e-commerce can serve as a schema for structuring product information within a knowledge graph. By representing products as instances of classes defined in the ontology and specifying relationships such as "is-a" or "part-of," the knowledge graph becomes enriched with semantic meaning, facilitating more precise search and retrieval of product data. Moreover, ontologies enable the harmonization of data representations across disparate systems by providing a common vocabulary and semantic framework for interlinking diverse datasets.

Particularly with the rapid adoption of natural language generators, such as large language models, knowledge graphs and ontologies are increasingly important. The knowledge graphs and ontologies are growing in size, and more users are interacting with knowledge graphs. However, issues can arise when knowledge graphs or ontologies become too large, or when they are accessed by many users. Accordingly, room for improvement exists.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

The present disclosure provides techniques and solutions for linking elements of different knowledges graph and for using such links during knowledge graph processing. When an element of a knowledge graph is created, such as a class, a property, or a class instance, it can be determined whether a corresponding element exists in another knowledge graph. If so, the elements can be operatively linked. When a query is executed against a knowledge graph, if an element is linked to an element of another knowledge graph, the other knowledge graph can be accessed for query processing. When statements are made about a knowledge graph element that is defined in a first knowledge graph element and where the element is defined with respect to an element of a second knowledge graph, the scope of the statement can be limited to the second knowledge graph.

In one aspect, the present disclosure provides a process of retrieving data from a second knowledge graph in response to a query of a first knowledge graph. A query is received specifying a first knowledge graph. It is determined that an element of the first knowledge graph specified in the query or it is determined from processing the query is linked to an element of a second knowledge graph. In executing the query, information from the second knowledge graph is retrieved using the element of the second knowledge graph. Query results are returned in response to the query.

In another aspect, the present disclosure provides a process of creating derivative elements in a local knowledge graph corresponding to elements of another knowledge graph. A request is received to create an element of a local knowledge graph. One or more other knowledge graphs are searched to determine if a semantically equivalent element is present in a knowledge graph of the one or more other knowledge graphs. It is determined that a putative semantically equivalent element is present in the knowledge graph. A derivative element is created in the local knowledge graph that is operatively linked to, and semantically identical to, the putative semantically equivalent element.

The present disclosure also includes computing systems and tangible, non-transitory computer readable storage media configured to carry out, or including instructions for carrying out, an above-described method. As described herein, a variety of other features and advantages can be incorporated into the technologies as desired.

### BRIEF DESCRIPTION OF THE DRAWINGS

FIG. 1 shows an exemplary directed graph.
FIG. 2 shows the domain and range of a property in a schema of a directed graph.
FIG. 3 shows an exemplary SPARQL query and results of the query.
FIG. 4 illustrates a computing environment that depicts how interactions between local graphs and a core graph can be managed, as well as managing access rights to various graphs.
FIG. 5 is a diagram illustrating relationships between a core knowledge graph and a local knowledge graph.
FIG. 6 provides a diagram illustrating an example core knowledge graph and its relationships to elements of two local knowledge graphs.
FIG. 7 is a diagram of a process of creating a class in a local knowledge graph.
FIG. 8 is a diagram of a process of creating a property in a local knowledge graph.
FIG. 9 is a diagram of a process of creating an instance in a local knowledge graph.
FIGS. 10A, 10B, and 10C illustrate example user interfaces for, respectively, creating a new graph statement, creating a new graph predicate, and creating a new graph class instance.
FIG. 11 is a flowchart of a process of retrieving information from a local knowledge graph.
FIG. 12A provides a class defining triples that can be used by an example graph database class.
FIG. 12B provides an example of how a semantic web application, such as using Python with RDFLib, can create and use knowledge graphs.
FIG. 12C provides an example of how a knowledge graph can be created and used using a content management system.
FIG. 12D illustrates various examples of how graph information can be stored/serialized, particularly in Turtle, RDF/XML, and JSON formats.
FIG. 13A is a flowchart of an example process of retrieving data from a second knowledge graph in response to a query of a first knowledge graph.
FIG. 13B is a flowchart of an example process of creating derivative elements in a local knowledge graph corresponding to elements of another knowledge graph.
FIG. 14 is a diagram of an example computing system in which some described embodiments can be implemented.
FIG. 15 is an example cloud computing environment that can be used in conjunction with the technologies described herein.

### DETAILED DESCRIPTION

### Example 1- Overview

In contemporary data management and analysis, knowledge graphs provide foundational frameworks for organizing, representing, and exploiting structured knowledge from diverse data sources. Knowledge graphs encode information in a graph-based format, having nodes representing entities and edges denoting relationships between these entities. This structure facilitates interconnected data synthesis and exploration, allowing for advanced data analytics, natural language processing (NLP), and artificial intelligence (AI) applications.

Ontologies can serve as schemas for defining domain-specific concepts and relationships in a knowledge graph. Essentially, ontologies provide formalized representations of domain knowledge, capturing hierarchical classifications (classes) and semantic relationships (properties) between entities. Through ontologies, knowledge graphs gain semantic richness and coherence, enabling more precise querying and inference over interconnected data. Statements about concepts, whether they be classes or instances, can be expressed, such as using RDF triples. RDF triples are formed as subject-predicate-object triples, where the subject denotes the entity or instance, the predicate represents the relationship or property, and the object signifies either another entity or a literal value.

The integration of ontologies with knowledge graphs enhances their expressiveness and interoperability across technical domains. For instance, in the context of a semantic web application, an ontology defining concepts related to e-commerce can serve as a schema for structuring product information within a knowledge graph. By representing products as instances of classes defined in the ontology and specifying relationships such as "is-a" or "part-of," the knowledge graph becomes enriched with semantic meaning, facilitating more precise search and retrieval of product data. Moreover, ontologies enable the harmonization of data representations across disparate systems by providing a common vocabulary and semantic framework for interlinking diverse datasets.

Particularly with the rapid adoption of natural language generators, such as large language models, knowledge graphs and ontologies are increasingly important. The knowledge graphs and ontologies are growing in size, and more users are interacting with knowledge graphs. However, issues can arise when knowledge graphs or ontologies become too large, or when they are accessed by many users. Accordingly, room for improvement exists.

Unified Modeling Language (UML) models and knowledge graphs share common goals of representing and organizing information but differ significantly in their underlying principles, representations, and intended use cases. UML models are primarily used in software engineering for designing and visualizing software systems, whereas knowledge graphs are used for organizing and semantically enriching diverse data sources for knowledge representation and reasoning.

One key similarity between UML models and knowledge graphs is their use of graphical representations to depict complex systems or domains. Both UML diagrams and knowledge graphs employ nodes and edges to represent entities and relationships, facilitating visual understanding and communication of the modeled concepts.

However, there are notable differences between UML models and knowledge graphs. UML models are typically static and focus on capturing the structural and behavioral aspects of software systems using predefined diagrams such as class diagrams, sequence diagrams, and activity diagrams. In contrast, knowledge graphs are dynamic and can represent a wide range of knowledge domains, including but not limited to software engineering. Knowledge graphs emphasize semantic richness and interoperability, enabling advanced querying, inference, and discovery of relationships and patterns across diverse datasets, which is facilitated by having more structured/formalized relationships between knowledge graph elements than is present in UML models.

A significant technical hurdle in adapting UML-related techniques to knowledge graphs arises from this more structured nature of relationships in knowledge graphs compared to UML. UML relationships are often represented using a predefined set of constructs and may not enforce strict semantics or constraints. In contrast, knowledge graphs typically utilize structured relationships defined by ontologies or schemas, which impose semantic constraints and enable sophisticated inference and reasoning capabilities. Accordingly, techniques developed for UML may not be useable with knowledge graphs, and their implementation may involve overcoming significant technical hurdles stemming from differences in representation, semantics, and the structured nature of relationships.

The present disclosure provides techniques that can be used to facilitate the customization of knowledge graphs, while maintaining knowledge graph consistency and reducing computing resource use. Certain techniques can be used to help manage a knowledge graph, such as what users have permission to modify knowledge graphs.

In one aspect, the present disclosure provides for "local" knowledge graphs that can use elements of a "core" or "global" knowledge graph. A user can thus create their own knowledge graph that may contain elements that are not in the core knowledge graph, but also include elements from the core knowledge graph. Access to the core knowledge graph can be "read only," such that the local graph is not allowed to modify the elements of the core knowledge graph. In addition, in particular implementations, the local knowledge graph is linked to/references the core knowledge graph, but does not directly incorporate elements (such as properties or property values) from the core knowledge graph. Maintaining this link can reduce computing resource use, such as because a single set of data can be used for local knowledge graphs and for the core knowledge graph. Further, if changes occur to the core knowledge graph, those changes are also "visible" to the local graphs, and so the elements of core knowledge graph in the local knowledge graphs do not become out of date/diverge from the core knowledge graph. Similar relationships can be established between different local knowledge graphs. Elements of a target knowledge graph that correspond to elements of a source knowledge graph can be referred to as semantically identical or semantically equivalent elements.

Relationships between knowledge graphs can be used to manage knowledge graphs, such as for operations that might modify a knowledge graph, as opposed to simply reading information from the knowledge graph. That is, each knowledge graph can have a set of one or more users who have rights to modify the knowledge graph. In this way, for example, a user may have the rights to manage elements that are directly in a local knowledge graph, but may not have rights to modify elements that come from other knowledge graphs, whether they are other local knowledge graphs or a core knowledge graph.

### Example 2- Example Knowledge Graphs

An enterprise may have a variety of different products, services, and teams. The enterprise may also have a comprehensive knowledge graph, storing knowledge regarding skills, processes, experiences, capabilities, and insights that are relied upon in day-to-day operations of the enterprise. Contents of the knowledge graph may also include enterprise specific acronyms, departments of the enterprise, and product specifications. The knowledge may enable the enterprise to react to business situations in a fast, professional, and flexible manner. The knowledge graph may be expensive and labor intensive to construct and maintain. The knowledge graph (*i.e.,* semantic web and/or web of linked data) may be specified using the Resource Description Framework (RDF).

Generally, a knowledge graph, or a subgraph/subset thereof, includes a plurality of nodes connected by edges. The nodes may represent real-world entities and the edges may represent relations between entities or relations between entities and types (i.e. classes) of the entities. Hence, predicates can be distinguished depending on whether they connect two entities or an entity and an entity type. The entities may also be referred to as resources. For each statement, the subject may correspond to a node, the object may correspond to a (different) node and an edge corresponding to the predicate may connect the subject node to the object node. Depending on a particular application, edges can be directed or can be undirected. For purposes of the present disclosure, examples are generally described as using directed graphs, such as graphs described using RDF. However, disclosed techniques can be adapted to be used with other types or implementations of graphs, including with undirected graphs.

The nodes may have corresponding classes, such that each of the nodes has a corresponding class. The (corresponding) classes may be part of (or organized in) a schema (i.e., a data schema or an ontology). The schema may be defined in the RDF or the Web ontology language.

The following are examples of classes:
:State a rdfs:Class .
:EuropeanState a rdfs:Class .
:City a rdfs:Class .

Hence ":State" is a resource that is a class, more specifically, an RDF class. The class ":EuropeanState" is another resource that is a class, more specifically, a subclass of ": State" Hence, hierarchies of classes are possible. Moreover, multiple inheritance is also possible.

In addition, or alternatively, the directed graph may be labeled and multi-relational. Accordingly, both the nodes and edges may have labels and the edges may have directions. The objects of the statements may be labels of the directed graph. The directed graph may be multi-relational in the sense that the edges have different labels. The nodes of the directed graph may be subjects or objects and the edges may be predicates.

In addition, or alternatively, the schema may include properties. Each of the properties may apply to at least one of the classes of the schema. At least one of the properties may have a domain and/or a range. Each of the properties may be used by (or apply to) at least one statement. The domain (e.g., rdfs:domain) may specify a class to which a subject belongs and the range (e.g., rdfs:range) may specify a class to which an object belongs. More specifically, the domain may specify a class to which the subject of the statement belongs, and the range may specify a class to which an object of the statement belongs. With regard to the RDF Schema, please refer to the W3C RDF Schema specification, https://www.w3.org/TR/rdf-schema/.

The following are examples of properties:

```
       rdftype a rdf:Property
       dbo:foundationPlace a rdf:Property .
       :EuropeanState rdfs: subClassOf : State .
       :locatedIn a rdf:Property .
       :capitalOf a rdf:Property .
       :capitalOf rdfs:subPropertyOf :locatedIn .
```

Hence, ":locatedIn" and ":capitalOf' are properties. Moreover, ":capitalOf' is a subproperty of ":locatedIn". Hence, properties can also form hierarchies. The property ":EuropeanState rdfs:subClassOf : State" indicates that ":EuropeanState" is a subclass in a class hierarchy including the class ":State" and the subclass ':European State".

Hence, the schema may provide a vocabulary for the directed graph (e.g., knowledge graph). The directed graph may have predefined property prefixes, which can indicate whether a node (i.e., a subject or object) is an instance of a class or a class (e.g., a node may be a class if the node has a prefix "dbo," which represents DBpedia ontology, and a node may be an instance if the node has a prefix "dbr," which represents DBpedia resource). In certain cases, the directed graph can use URI design to differentiate between instances and classes. The directed graph may include statements which explicitly indicate certain nodes are classes. In certain cases, whether a specific node represents an instance or a class can depend on the underlying model. For example, whether a node is a class (and included in the schema of the directed graph) or an instance (thus is not included in the schema of the directed graph) can be determined by checking the rdf:type property: If the type is owl:Class, then the node is a class and is included in the schema; otherwise the node is instance (i.e., instance of a class) and is not included in the schema.

Compared to relational databases, the knowledge graph has a more flexible data structure because the types of data provided by the knowledge graph can vary. For example, properties associated with different instances can differ even though these instances share the same class (e.g., "SAP_SE" and "BASF_SE" can have different property data available although they share the same class "Company"). On the other hand, a relational database can be represented in a knowledge graph format, i.e., the knowledge graph can be a higher-level abstraction of the relational database.

In certain examples, the nodes in the directed graph (e.g., knowledge graph) can be organized in a hierarchical structure where a lower-level node (representing a more specific object) may be connected to a higher-level node (representing a more generic object) by one or more edges. The lower-level node (or the lower-level object it represents) can be called a descendant of the higher-level node (or the higher-level object it represents), and the higher-level node (or the higher-level object it represents) can be called an ancestor of the lower-level node (or the lower-level object it represents).

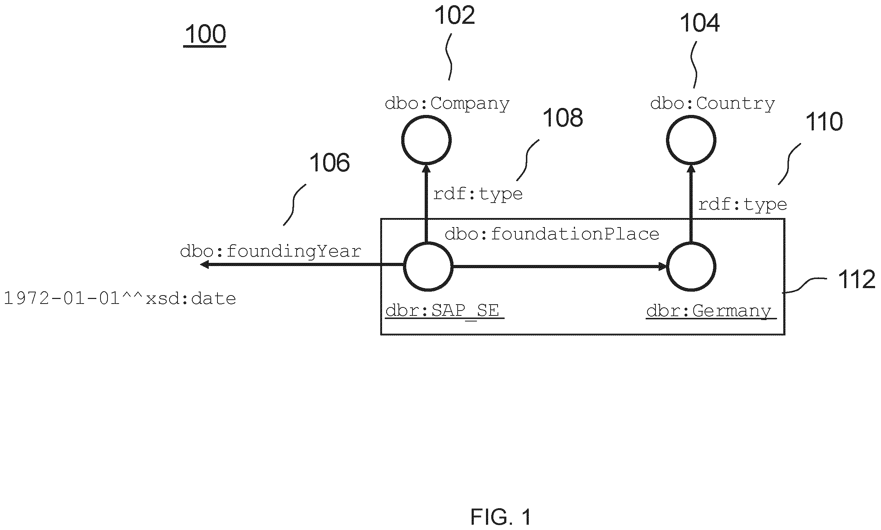

FIG. 1 shows a subset 100 of a directed graph. More specifically, FIG. 1 shows a subset 100 of a knowledge graph. Nodes of the directed graph are shown as circles and edges of the directed graph are shown as arrows. The subset 100 of the directed graph includes labels 102, 104, 106, 108, 110, where the labels are URIs and defined in the resource description framework (RDF). The node labels 102 and 104 are objects, the edge labels 106, 108, 110 are predicates. The string "1972-01-01" may also be a node label (i.e., an object) having a type of xsd:date.

The subset 100 of the directed graph includes a statement 112 (i.e., triple statement) having a subject "dbr:SAP_SE", a predicate "dbo:foundationPlace" and an object "dbr:Germany", each of which are URIs defined in RDF. An exemplary serialization of the statement 112 is dbr:SAP_SE dbo:foundationPlace dbr:Germany. A schema of the directed graph may be defined via RDF schema (RDFS) or Web Ontology Language (OWL) from the World Wide Web Consortium (W3C).

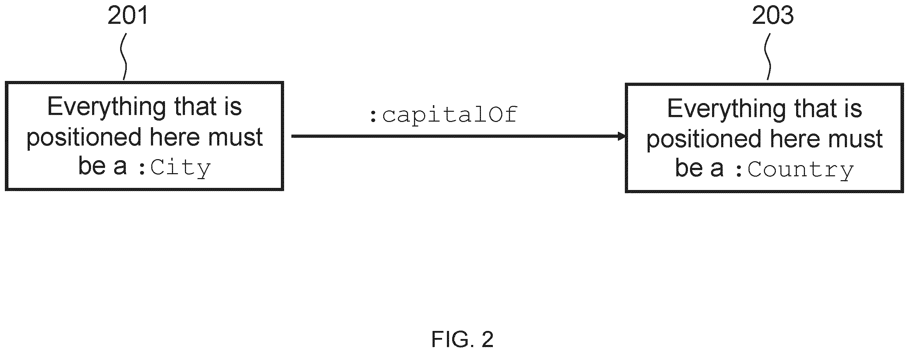

FIG. 2 shows a domain 201 and a range 203 of a property, ":capitalOf'. The domain 201 and the range 203 may be defined as follows:
:capitalOf rdfs: domain :City .
:capitalOf rdfs:range :Country .

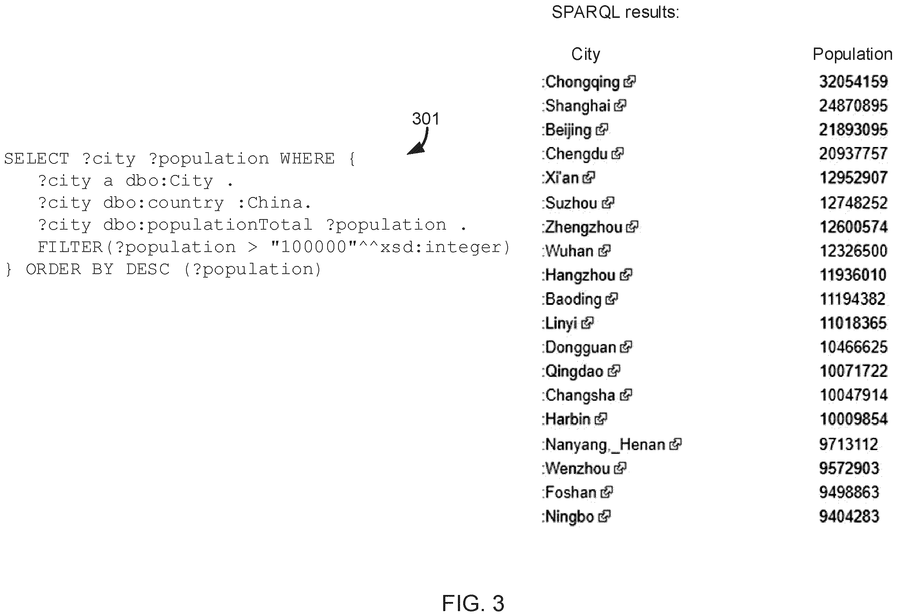

FIG. 3 shows an exemplary SPARQL query 301 of a knowledge graph. The query 301 is configured to determine an answer to the following question: what is the population of cities in China which have more than 100,000 inhabitants? The results of executing the query 301 are also shown.

### Example 3- Example Computing Environment Supporting Relationships Between Knowledge Graphs

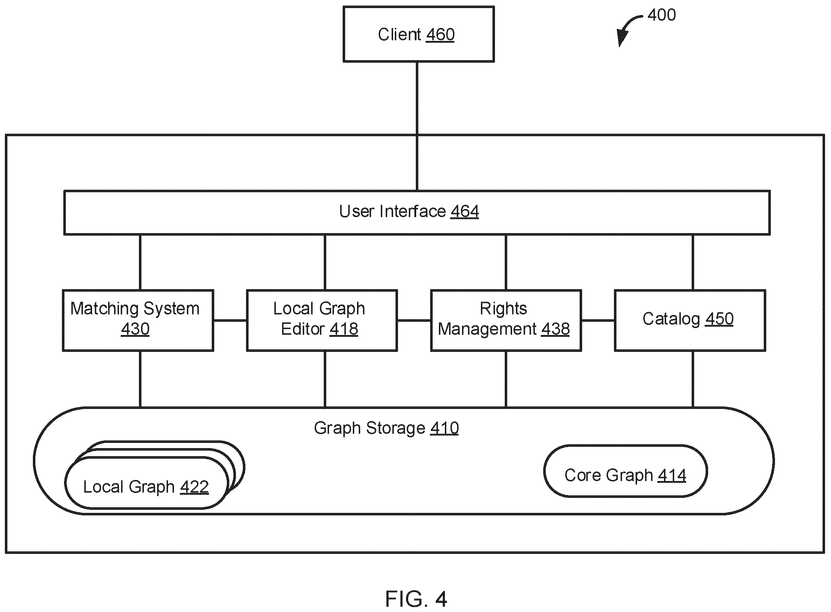

FIG. 4 illustrates a computing environment 400 that depicts how interactions between local knowledge graphs and a core knowledge graph can be managed, as well as managing access rights to various knowledge graphs. The computing environment 400 presumes that a core knowledge graph 414 is available, such as in graph storage 410. In a particular implementation, knowledge graphs can be maintained in RDF format, such as using RDF triples, but other types of knowledge graph representations can be used without departing from the scope of the present disclosure.

The computing environment 400 includes a local knowledge graph editor 418 that can be used to create local knowledge graphs 422 of the graph storage 410. As will be further explained, local knowledge graphs 422 can have some elements that are "unique" to a given local knowledge graph, or at least where the local knowledge graph serves as the primary "source" of a graph element. That is, a first local knowledge graph 422 may reference elements of a core knowledge graph 414, but a second local knowledge graph can reference elements that are defined in the first local knowledge graph. From the perspective of the second local knowledge graph, the first local knowledge graph may act as a core knowledge graph for the elements that are first defined in the first knowledge local graph, even if the first local knowledge graph also references the core knowledge graph 414.

The computing environment 400 further includes a matching system 430. The matching system 430 compares knowledge graph elements, such as between the core knowledge graph 414 and a local knowledge graph 422, or between two local knowledge graphs, to determine whether they are the same. For example, if a user attempts to define a new class or a new instance for a local knowledge graph 422, the matching system 430 can determine whether that class or instance already exists in the core knowledge graph 414 or another local knowledge graph. While any suitable matching technique can be used, suitable matching techniques include those described in U.S. Patent Nos. 11,487,721 and 11,263,187, which are hereby incorporated by reference.

Typically, users have at least read access to the core knowledge graph 414, while a proper subset of those users may also be permitted to modify the core knowledge graph, including adding, removing, or modifying core knowledge graph elements. "Write" access to local knowledge graphs 422 can be restricted, as can read access. That is, a given user may have read access to the core knowledge graph 414, but may have read access to less than all local knowledge graphs 422 of the graph storage 410.

A rights management component 438 can be used to track access rights, and perform authorization checks. For example, when a user wishes to create or modify a local knowledge graph 422 using the local knowledge graph editor 418, the local knowledge graph editor can use the rights management component 438 to determine what local knowledge graphs are available to the user. The matching system 430 can then perform matching operations with respect to these knowledge graphs.

Knowledge graphs can be very useful, but can require much effort to create and maintain. In some implementations, the computing environment 400 can include a catalog 450 that users can access to view knowledge graphs that are available in the graph storage 410. Although the graph storage 410 shows a single core knowledge graph 414, the graph storage 410 can include multiple core knowledge graphs, as well as having multiple local knowledge graphs 422. The catalog 450 can provide descriptive information about core knowledge graphs 414 and local knowledge graphs 422, and a user can request access to such knowledge graphs, such by purchasing access. In response to such a transaction, the rights management component 438 can update stored rights information to indicate that a user now has rights to the selected core knowledge graph 414 or local knowledge graph 422.

A client 460 can access one or more of the local knowledge graph editor 418, the matching system 430, the rights management component 438, or the catalog 450 through a user interface 464. For example, the user interface 464 can allow a user to create or edit local knowledge graphs 422 using the local knowledge graph editor 418. Matching results from the matching system 430 can be displayed on the user interface 464 (or the matching results can be processed through the local knowledge graph editor 418 and displayed on the user interface). The user interface 464 can allow a user to edit access rights using the rights management component 438. A user can view available knowledge graphs of the catalog 450 through the user interface, and can optionally request access to one or more of such knowledge graphs, where access rights can then be provided using the rights management component 438.

### Example 4- Example Relationships Between Elements of Source and Target Knowledge Graphs

As discussed, core knowledge graphs can embrace a wide variety of subject matter, and can serve as a central source of truth for an organization. Accordingly, typically write access to the core knowledge graph is tightly controlled. While local knowledge graphs can read from the core knowledge graph, local knowledge graphs can be defined as proper subsets of the core graph. That is, often, for a particular use scenario, all elements of a core knowledge graph may not be needed/relevant. Accordingly, a local knowledge graph can be created that includes a proper subset of the elements (nodes and edges) of the core knowledge graph, and can optionally include elements beyond those in the core knowledge graph.

When a local knowledge graph is created, access rights can be specified as to users/software processes that can read from the local knowledge graph or that can make changes to the local knowledge graph. Typically, access rights are specified for the local knowledge graph overall, rather than for particular elements of the knowledge graph, which can simplify rights management. That is, even local knowledge graphs can contain many nodes and edges, and it can be impracticable to specify access rights on a node-by-node basis.

Different local knowledge graphs, as well as core knowledge graphs, can be associated with their own namespaces/URI schemas, which distinguishes between the knowledge graphs, and provides a way to track/enforce access rights. Consider a core knowledge graph named "core" and a local knowledge graph named "odm." Their respective prefixes can be:
@PREFIX core: <http://www.sap.com/core>
@PREFIX odm: <http:///www.sap.com/odm?

These prefixes can then be used in RDF triples, such as a triple for the local odm knowledge graph of:
odm:BusinessPartner rdf:type odm:Entity

As explained in Example 1, knowledge graphs are often associated with an ontology, which provides a "schema" for the knowledge graph. Having an ontology that is used for the core knowledge graph, and preferably local knowledge graphs, can be useful, as it can help ensure the same terminology is used to describe the same semantic concepts.

With local knowledge graphs, users may wish to introduce ontological elements, such as properties, which are not present in a global ontology used with a core knowledge graph. The situations can be handled in various ways. Taking an ontological property as an example, if a new property is desired, in one approach, the property is created, or requested to be created, in the global ontology. However, this can be undesirable in some circumstances, such as when other users (with other local knowledge graphs) may wish to use the same semantic concept and the original property name may not be the "best" to use, or where it may be desirable to incorporate the property into the core knowledge graph at some point, but again with a different name.

Accordingly, in another approach, when a new property (or other ontological element) is desired, it can be created locally (such as a local extension to the global ontology). This approach can also be used while a request to add a property to a global ontology is pending, or can continue to be used in the event that a request to add the property to the global ontology is denied.

While local knowledge graphs can include elements, including elements tied to an ontology, beyond what is in a core knowledge graph or its ontology, it can be desirable to enforce the use of the core knowledge graph and its ontology for concepts that are expressed in the core knowledge graph/ontology. As will be further described, if a user desires to add a new knowledge graph element to a local knowledge graph, if it can be first determined if the element exists in the core knowledge graph/its associated ontology. If so, the user may be prompted to use the node of the core knowledge graph. In some cases, users can be restricted from creating knowledge graph elements that are determined to correspond to elements of a core knowledge graph.

The present disclosure allows knowledge graph elements, such as instances, classes, or properties of one knowledge graph to be "reused" in other knowledge graphs, where the reused elements can be thought of as being derivatives of the elements in the source knowledge graph. As a specific example, consider that a company may have a large number of products, each potentially having multiple components. A core knowledge graph may be created for these products. Because of its importance, a very limited number of users may have rights to modify this core knowledge graph.

The company may desire to have more specific information for particular products, such as in knowledge graphs that reflect entities (which can correspond to relational database tables), entity attributes, and relationships between entities and attributes. A local knowledge graph can be created for a particular area of operation (also referred to as a "domain"). The local knowledge graph may introduce elements that are different than elements in the core knowledge graph, including being more specific to the domain. That is, in some cases it may be desirable to keep higher-level/more common (or fundamental) information in a core knowledge graph, and to include more specific information in a local knowledge graph, which can help keep the core knowledge graph at a more manageable size.

However, for the reasons previously described (such as reducing storage requirements and improving consistency), it can be beneficial to use elements of the core knowledge graph in a local knowledge graph. If "statements" are made regarding these core knowledge graph elements, it is desirable to clarify that these are statements made by the local knowledge graph and not by the core knowledge graph. Along with enforcing "read only" status for reuse of core knowledge graph elements, this "attribution" aspect can help clarify the veracity/scope of knowledge graph elements. For example, a statement in a local knowledge graph for an element reused from a core knowledge graph can be understood to have a scope that is limited to that local knowledge graph. Users of the core knowledge graph or other local knowledge graphs would not see that statement, unless, for example, another local knowledge graph was linked to that statement.

For properties of a core knowledge graph (or, more generally, "source" knowledge graphs - since in some cases local knowledge graphs can act as sources for other local knowledge graphs) that are reused, the reused element of the local (or target) knowledge graph can be referred to as a subproperty of the property of the source knowledge graph. For example, assume that a local private knowledge graph needs an object property with the semantics of "hasMetric." If another knowledge graph, either the core knowledge graph or a different local knowledge graph, contains a property with this semantic, it can be advantageous to reuse the property rather than creating a duplicate property with the same semantic.

To help maintain the veracity of the source knowledge graph, a user of the target knowledge graph is not allowed to make statements about the property in the source knowledge graph. However, the user of the local knowledge graph can make statements in the local knowledge graph about the subproperty derived from the source knowledge graph. The namespace information discussed earlier can enable this functionality.

Consider an example having a core knowledge graph, a first local knowledge graph named "odm," and a second local knowledge graph named "signavio." These knowledge graphs can have respective namespaces of:
@PREFIX core: <http://www.sap.com/core>
@PREFIX odm: <http://www.sap.com/odm>
@PREFIX sig: <http://www.signavio.com/>

The following RDF triples express the "hasMetric" property of the source local knowledge graph (odm) and the relationship between the "hasMetric" subproperty of the target local knowledge graph (sig) and the "hasMetric" property of the source local knowledge graph:
odm: hasMetric rdf:type owl:ObjectProperty
sig: hasMetric rdfs:subPropertyOf odm:hasMetric

Consider the knowledge graph element of classes. A derivative class of a target knowledge graph can be related to the source class with an "isDerivativeOf' relation. Of course, the names for this and other techniques of the present disclosure are by way of example, and other names could be used for the same functionality. Instances of the derivative class include properties that establish and detail a link to a specific instance of the source class. A hasDerivative object property establishes a link to the source instance. A DataTypeProperty is used to store an identifier of the source instance.

Typically, reuse of an instance of a source knowledge graph presumes that the local knowledge graph has the appropriate class for the instance. If an instance from a source knowledge graph is to be reused, it can first be determined whether the target knowledge graph includes a derivative class of the source class of the source instance. If the derivative class does not exist, it is created, and a local class instance is created in the target knowledge graph and linked to the corresponding instance in the source knowledge graph.

Summarizing the process when an instance from a source knowledge graph and the derived class does not exist in the target knowledge graph, the derived class is created in the target knowledge graph. A new instance of that derived class is created in the target knowledge graph, and is linked to the original instance using the hasDerivative relation. The name of the original instance is transferred to the new instance, and the identifier of the original instance is transferred to the datatype attribute DerivedFromIdentifier of the new instance. This process can be expressed in pseudocode as:

```
METHOD reuseInstance (Instance i, Graph thisgraph):
          IF NOT derivativeExistsInGraph(i.getClass(), thisGraph) THEN
             derivative = thisGraph.createDerivative(i.getClass)
          newInstance = thisGraph.createDerivedInstance(i)
```

As a more concrete example, assume a core knowledge graph has an instance representing the HANA database of SAP, SE. The instance might be represented in the source knowledge graph, ppms: HANA. The local knowledge graph creates (or contains) a class odm:Product which is a derivative of the source class, ppms:Product, of which ppms:HANA is an instance. The local knowledge graph creates its own node odm:HANA, and the local knowledge graph notes (through the properties discussed above) that odm:HANA is derived from ppms:HANA. When the local knowledge makes statements about HANA, it only makes statements using odm:HANA, not ppms:HANA.

In some implementations, information related to target knowledge graph elements that are derived from source knowledge graph elements are obtained directly from the source knowledge graph. For example, in the case of an instance, if information about a derived instance in a target knowledge graph is needed, such as property values, the values can be obtained from the source knowledge graph, rather than copying these values to the target knowledge graph. The values can be obtained using the properties of the target knowledge graph instance, such as the "core:hasDerivative" link (which, from the point of view of the target knowledge graph can be the reciprocal "isDerivativeOf').

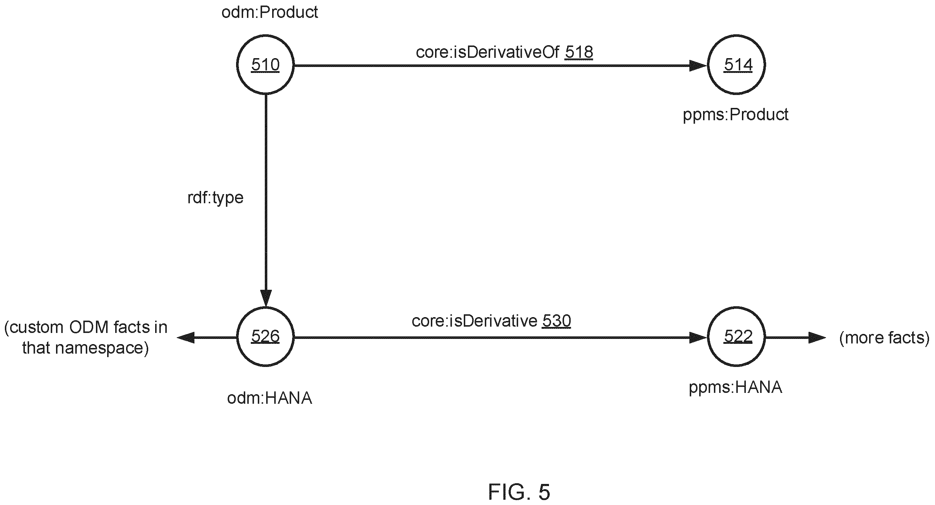

FIG. 5 depicts the above scenario, where a Product node 510 of the target knowledge graph ("odm") references a Product node 514 of the source knowledge graph ("ppms"). An edge 518 between the nodes 510, 514 establishes the derivative relationship. In turn, an instance 522 of the Product node 514 of the source knowledge graph is linked to a corresponding node 526 for a derived instance of the instance 522. An edge 530 establishes that the node 526 is a derivative of the node 522.

FIG. 5 also illustrates how the instance nodes 522, 526 can be associated with additional facts. The source instance node 526 can have facts that can be read, but not modified, by the target knowledge graph. Conversely, the instance node 526 can have added facts that are specific to the target knowledge graph.

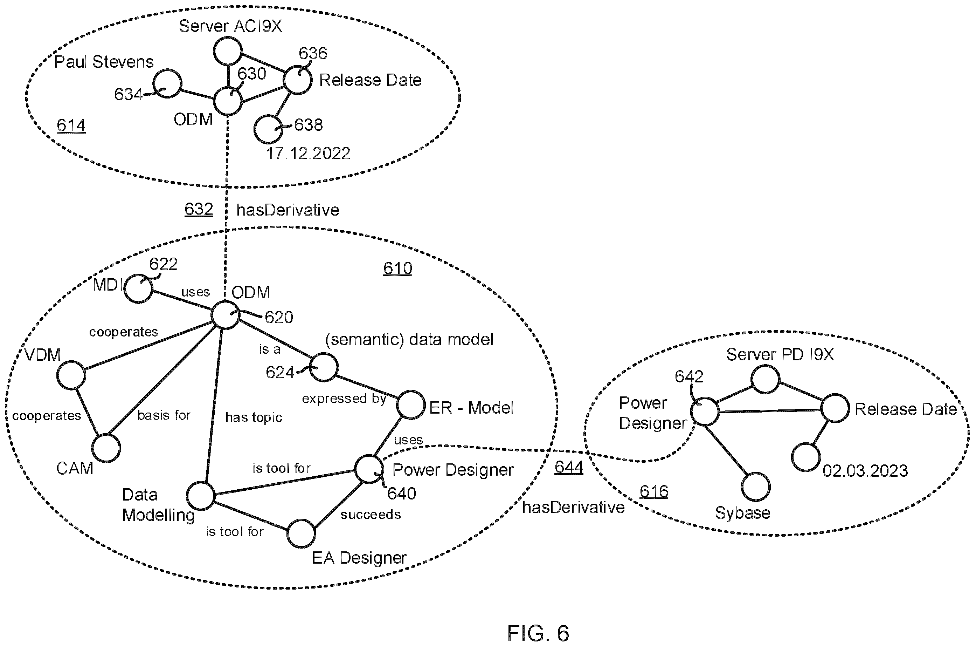

FIG. 6 provides a more comprehensive depiction of how local knowledge graphs 614, 616 can relate to a core knowledge graph 610. FIG. 6 also illustrates how the core knowledge graph 610 can have higher-level/more fundamental information, where additional details can be added using a local knowledge graph 614, 616. For example, node 620 of the core knowledge graph 610 represents a "one domain model" in systems of SAP, SE. The core knowledge graph 610 indicates that a master data integration product, represented by node 622, uses the one domain model, and that one domain model is a semantic data model through an edge to node 624.

ODM node 630 of local knowledge graph 614 has an isDerivative relationship, indicated by edge 632, with the ODM node 620 of the core knowledge graph 610. The local knowledge graph 614 then provides more specific facts about the one domain model. For example, node 634 can represent a person, and an edge linking the nodes 630, 634 can indicate a "hasOwner" relationship. Node 636 can indicate a release date, which is linked to a node 638 providing a literal value for the release date. An edge between the nodes 630, 636 can be used to establish that the ODM of node 630 is associated with the particular release date of node 638.

Node 640 of the core knowledge graph 610 can be linked to a node 642 of the local knowledge graph 616 using a hasDerivative edge 644 in a similar manner as edge 632 links nodes 620 and 630. Note that in FIG. 6, the only relationships between the knowledge graphs 610, 614, 616 use hasDerivative edges.

### Example 5- Example Processes for Creating Local Knowledge Graph Elements

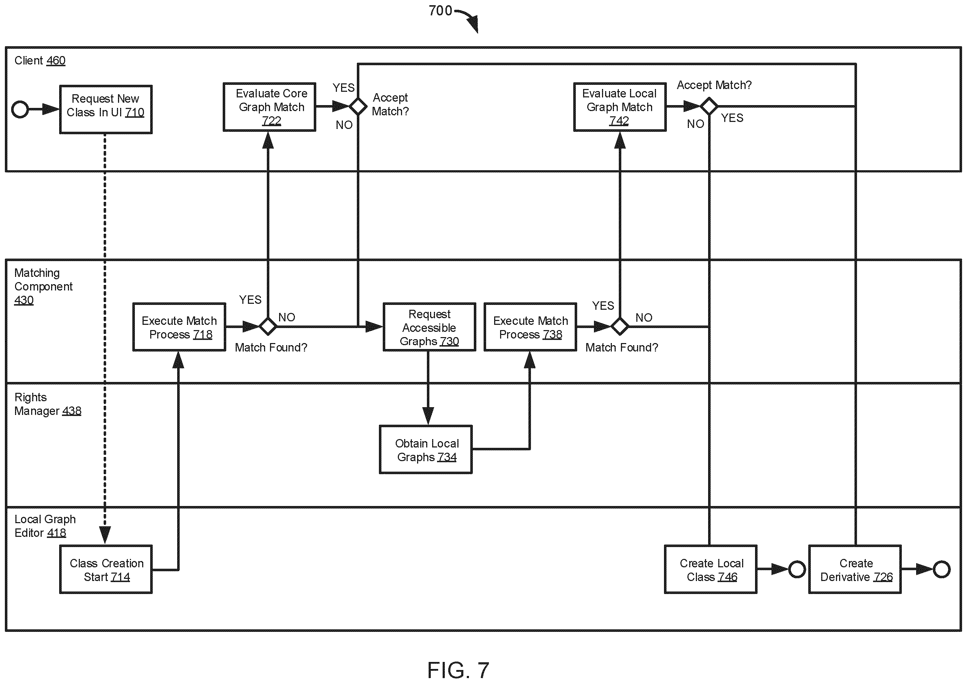

FIGS. 7-9 provides swim lane diagrams of processes for creating various types of derivative elements in a target knowledge graph. FIGS. 7-9 are described using the specific example of core and local knowledge graphs, but can be applied more generally to source and target knowledge graphs. The processes can be implemented using components of the computing environment 400 of FIG. 4, particularly the client 460, the local knowledge graph editor 418, the matching system 430, and the right management component 438,

FIG. 7 provides a swim lane diagram of a process 700 for creating a class in a local knowledge graph, which can be a new class in the local knowledge graph or a derivative of a class in a core knowledge graph. At 710, the client 460 requests the creation of a new class through a user interface, such as the user interface 464 of FIG. 4. The request is received by the local knowledge graph editor 418, which begins a class creation process (such as a computing method or function) at 714. The local knowledge graph editor 418 calls the matching system 430, which executes a matching process at 718. For example, the request provided at 710 can provide a class name. The matching process 718 can determine whether the name exists in a core knowledge graph, or whether a semantically equivalent class exists in the core knowledge graph.

If a match is found, the match can be displayed to the client 460, such as through the user interface 464. At 722, the client evaluates the match and determines whether the proposed match reflects their intent. If so, the client can approve the match, and a derivative class is created in the local knowledge graph by the local knowledge graph editor 418 at 726.

If a match is not identified at 718, or if the match is rejected by the user after evaluation at 722, the matching component 430, at 730, requests from the rights management component 438 local knowledge graphs to which the user has access rights. The rights management component 438 obtains the relevant local knowledge graphs at 734 and provides them to the matching component 430. The matching component 430 then executes a matching process on the local knowledge graphs at 738.

If a match is found, the match can be presented to the client 460, who can evaluate the match at 742. If the client 460 accepts the match, the process 700 proceeds to 726. If a match is not identified at 738, or if the user rejects the match after evaluation at 742, a new local class (not linked to a class of the core knowledge graph) is created at 746.

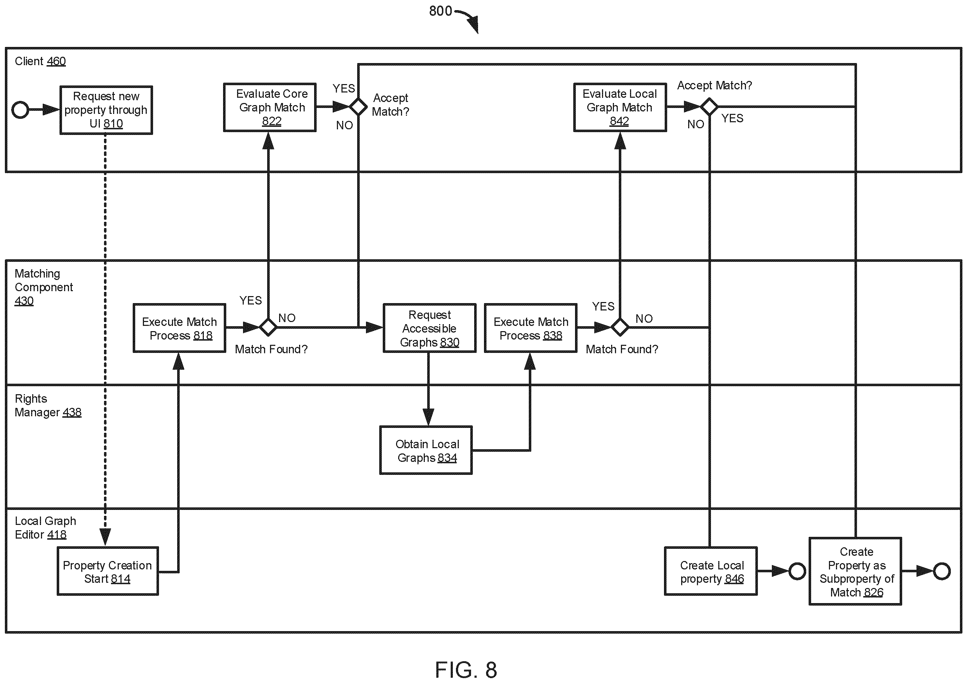

FIG. 8 provides a swim lane diagram of a process 800 for creating a property, either as a new property of a local knowledge graph or as a subproperty of a property of a core knowledge graph. At 810, the client 460 requests the creation of a new property through a user interface, such as the user interface 464 of FIG. 4. The request is received by the local graph knowledge editor 418, which begins a property creation process (such as a computing method or function) at 814. The local knowledge graph editor 418 calls the matching system 430, which executes a matching process at 818. For example, the request provided at 810 can provide a property name. The matching process 818 can determine whether the name exists in a core knowledge graph, or whether a semantically equivalent property exists in the core knowledge graph.

If a match is found, the match can be displayed to the client 460, such as through the user interface 464. At 822, the client evaluates the match and determines whether the proposed match reflects their intent. If so, the client can approve the match, and a subproperty, linked to the corresponding property of the core knowledge graph, is created in the local knowledge graph by the local knowledge graph editor 418 at 826.

If a match is not identified at 818, or if the match is rejected by the user after evaluation at 822, the matching component 430, at 830, requests from the rights management component 438 local knowledge graphs to which the user has access rights. The rights management component 438 obtains the relevant local graphs at 834 and provides them to the matching component 430. The matching component 430 then executes a matching process on the local knowledge graphs at 838.

If a match is found, the match can be presented to the client 460, who can evaluate the match at 842. If the client 460 accepts the match, the process 800 proceeds to 826. If a match is not identified at 838, or if the user rejects the match after evaluation at 842, a new local property (not linked to a property of the core knowledge graph) is created at 846.

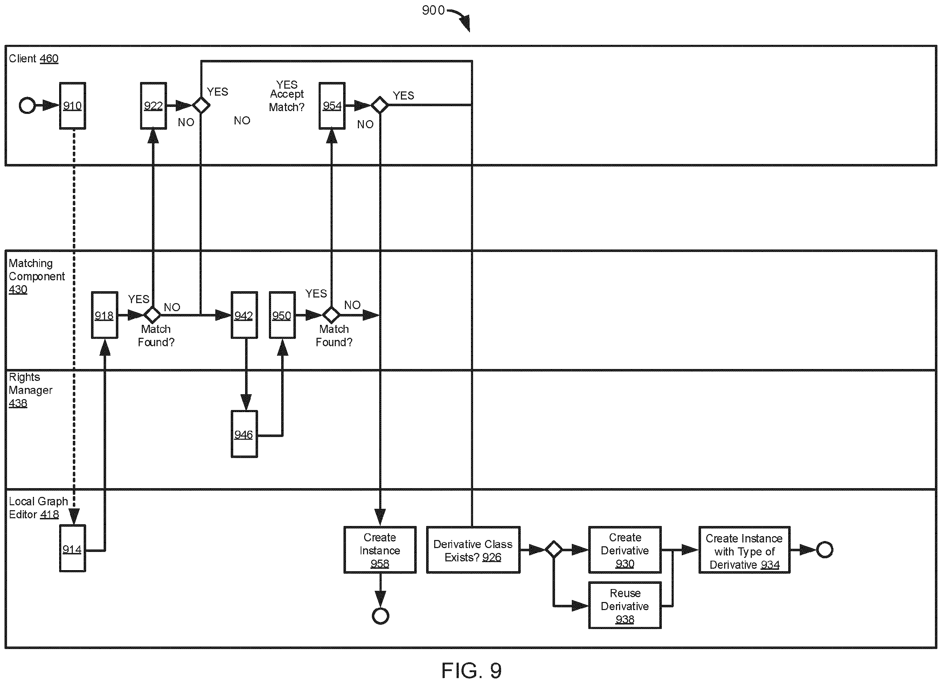

FIG. 9 provides a swim lane diagram of a process 900 for creating an instance, either as a new instance of a local knowledge graph or as a derivative instance of an instance of a core knowledge graph. At 910, the client 460 requests the creation of a new instance through a user interface, such as the user interface 464 of FIG. 4. The request is received by the local knowledge graph editor 418, which begins an instance creation process (such as a computing method or function) at 914. The local knowledge graph editor 418 calls the matching system 430, which executes a matching process at 918. For example, the request provided at 910 can provide an instance name or identifier. The matching process 918 can determine whether the name or identifier exists in a core knowledge graph.

If a match is found, the match can be displayed to the client 460, such as through the user interface 464. At 922, the client evaluates the match and determines whether the proposed match reflects their intent. If so, it is determined by the local graph editor 418 at 926 whether a derivative class corresponding to the class of the instance in the core knowledge graph exists in the local knowledge graph. If not, the derivative class is created at 930, and an instance of the derivative class, corresponding to the instance of the core knowledge graph, is created in the local knowledge graph at 934. If it is determined in response to 926 that the derivative class already exists, the existing derivative class is reused at 938, and the process 900 proceeds to 934.

If it is determined at 918 that a match was not identified, or if the user rejected the match in response to evaluation at 922, the matching component 430 can request from the rights management component 438 local knowledge graphs to which the client 460 has access at 942. The rights management component 438 obtains such local knowledge graphs at 946 and sends them to the matching component 430. The matching component 430 executes a matching process for the instance using the local knowledge graphs at 950.

If a match is identified, the match is presented to the client 460, who evaluates the match at 954. If the match is approved, the process 900 proceeds to 926. If a match is not found at 950, or if the user rejects the match after evaluation at 954, the process creates a new local instance, of a local class, at 958.

### Example 6- Example User Interfaces for Creating Knowledge Graph Elements

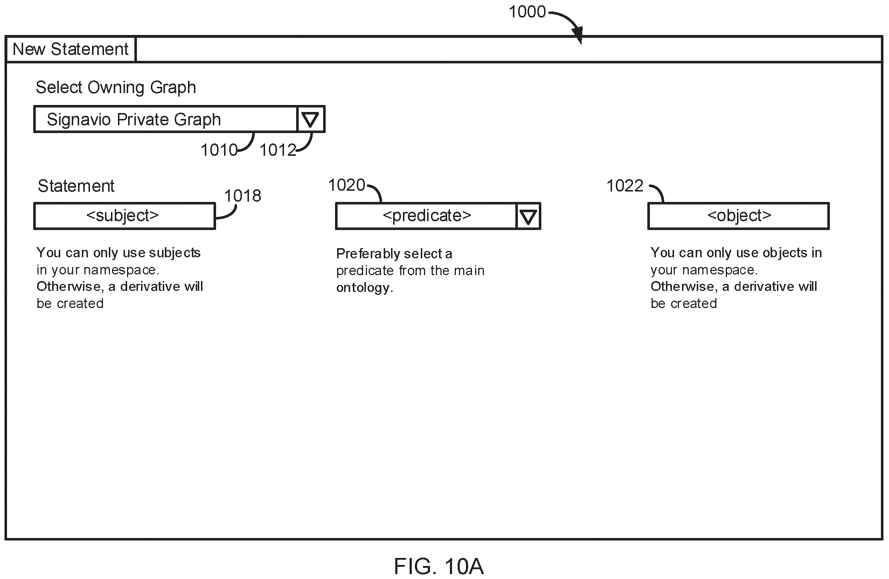

FIGS. 10A-10C provide example user interfaces for creating new local knowledge graph elements, where, in some cases, the user is provided feedback as to whether corresponding elements may correspond to elements of a core knowledge graph or another local knowledge graph. The user interface 1000 of FIG. 10A illustrates how a user can define a new statement.

A user interface element 1010 allows a user to select a knowledge graph to which the statement will be assigned. In some implementations, a user interface control 1012 allows a user to select from preexisting knowledge graphs, such as by providing a dropdown menu. A user can then define a statement, such as in the form of an RDF triple having a subject, an object, and a predicate. User interface elements 1018, 1022 allow a user to enter a subject and an object. The user interface elements 1018, 1022 allow for freeform text entry while, at least in some implementations, predicates are selected from a defined set using a user interface element 1020. For example, selection of user interface element 1020 can cause a list of available predicates to be displayed in a dropdown menu.

The user interface elements 1018, 1020, 1022 can be implemented in different ways. For example, the user interface element 1020 can also allow for freeform text entry, where entered text is compared against a set of available predicates, and an alert can be provided if the entered text does not match (either exactly or semantically) an existing predicate. In some cases, a user is constrained to a set of defined predicates, while in other cases entry of a predicate that is not in the defined set is allowed. Typically, the predicate is defined for the local graph being created/modified using the user interface 1000 if it does not currently exist.

FIG. 10A illustrates informational text that can be displayed to users. For example, the subject and object user interface elements 1018, 1022 are associated with text indicating that attempts to use subjects or objects that exist in another namespace (or at least in a namespace for a core knowledge graph) will result in the creation of a derivative subject or object. Thus, the user interface 1000 can be associated with functionality that prevents users from creating subjects or objects that correspond to subject or objects in other namespaces. This functionality can be extended to prevent the creation of subjects or objects that are semantically equivalent to those in other knowledge graphs.

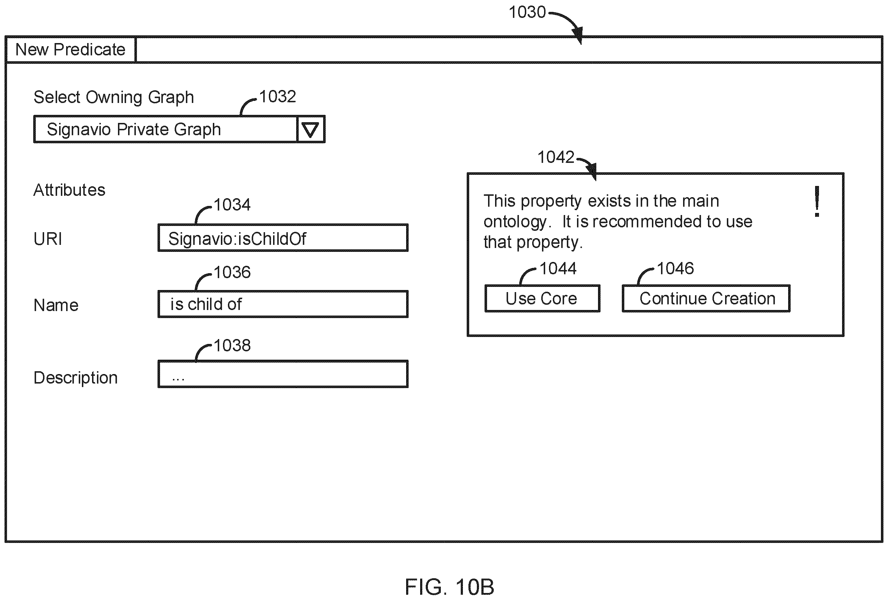

FIG. 10B illustrates a user interface 1030 that allows a user to define a predicate. Like the user interface 1000, the user interface 1030 includes a user interface element 1032 that allows a user to select a knowledge graph to which the predicate will be assigned. The user interface 1030 allows users to enter values for particular attributes of the predicate. In respective fields 1034, 1036, 1038, a user can enter a URI, a name, and a description for the predicate.

FIG. 10B illustrates a message 1042 that can be displayed if the user enters information for a predicate that exists in another knowledge graph, such as a core knowledge graph. In a particular implementation, a computing process compares the name entered in the field 1036, and optionally semantic equivalents, to existing predicates. In this scenario, the message 1042 provides a user interface element 1044 that allows the user to select the predicate from the core data model and a user interface element 1046 that allows the user to continue the creation of a predicate that is not tied to the predicate of the core knowledge graph.

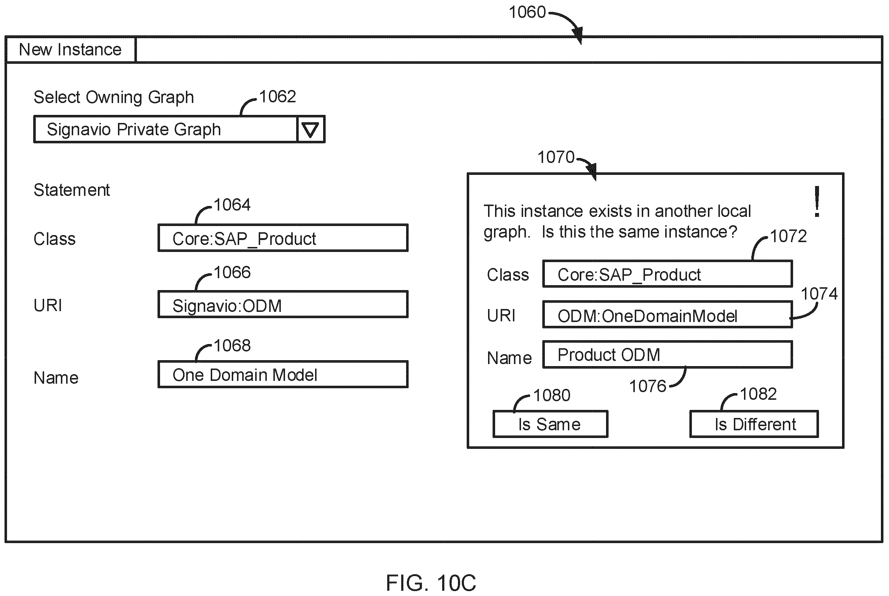

FIG. 10C illustrates a user interface 1060 that allows a user to create a new class instance. The user interface 1060 includes a user interface element 1062 that allows a user to select a knowledge graph to which the instance will be added. The user interface 1060 further includes a user interface element 1064 that allows a user to enter a class to which the instance will be assigned, a user interface element 1066 that allows a user to specify a URI for the instance (which can include the namespace for the knowledge graph to which the instance will be assigned), and a user interface element 1068 that allows a user to enter a name for the instance.

When the name of the instance is provided using the user interface element 1068, computing logic associated with the user interface 1060 can determine whether the name corresponds to an instance name in another knowledge graph, such as a core knowledge graph or in another local knowledge graph. If so, the user interface 1060 can display a message 1070 indicating that an instance with that name already exists.

The message 1070 can display the class 1072, URI 1074, and name 1076 of the identified instance. The user can then select a user interface element 1080 if the identified instance is the same instance as the user intended to add, or a user interface element 1082 if the instance is different. If user interface element 1080 is selected to indicate that the instance is the same, a derivative of the instance can be created in the local knowledge graph, as previously described.

Note that in the specific example illustrated in the user interface 1060, the class specified in the user interface element 1064 is the same as the class 1072 identified in the message 1070. This information can be used to help determine whether an instance to be added may correspond to an existing instance. In contrast, the URI of the user interface element 1066 is different than the URI 1074 of the message 1070, having different namespaces as well as different instance identifiers, which indicates that the instances are in different knowledge graphs.

The instance of the message 1070 has been identified as possibly corresponding to the instance the user wishes to add, even though the name 1076 of the instance in the message differs from the name entered using the user interface element 1068. This indicates that the matching logic does not require strict identity between instance names for possible matches. For example, the matching logic can look for overlap between information/text between the two URIs (for example, here both contain the text ODM), or between a URI and a name (for example, where the user interface element 1068 includes the text "One Domain Model," which is also present in the URI 1074 of the message 1070). A degree of overlap can be used to help prioritize or rank possible matches, as can where the overlap occurs (for example, between URIs, between names, or between a name and a URI). In the case where multiple possible matches are found, possible matches can be displayed to a user, who can then select the appropriate element, or indicate that a new element is desired. This display/selection process can be incorporated into the processes 700, 800, 900 of FIGS. 7-9.

### Example 7- Example Operations for Retrieving Information from Local Knowledge Graph

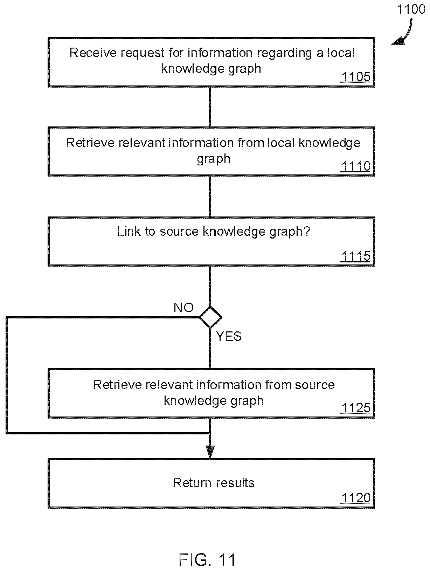

FIG. 11 provides a flowchart of a process 1100 of retrieving information from a local knowledge graph using techniques of the present disclosure. At 1105, a request for information is received regarding a local knowledge graph. For example, the request can be a query in a computer-implemented query language such as SPARQL that is executed on knowledge graph information, such as RDF triples, stored in a graph database. Relevant information is retrieved from the local knowledge graph at 1110.

It is determined at 1115 whether an element of the local knowledge graph specified in the query, or determined as part of query execution, is linked to an element of a source knowledge graph, which can be a core knowledge graph or another local knowledge graph. If not, query results are returned in response to the request at 1120. If a link is identified at 1115, relevant information is retrieved from the source knowledge graph at 1125, and the process 1100 then proceeds to 1120.

### Example 8- Example Knowledge Graph Implementations

As described earlier, knowledge graphs are fundamentally computer-implemented structures, and which can be processed, such as part of graph definition operations or graph query operations, using computer-executed processes.

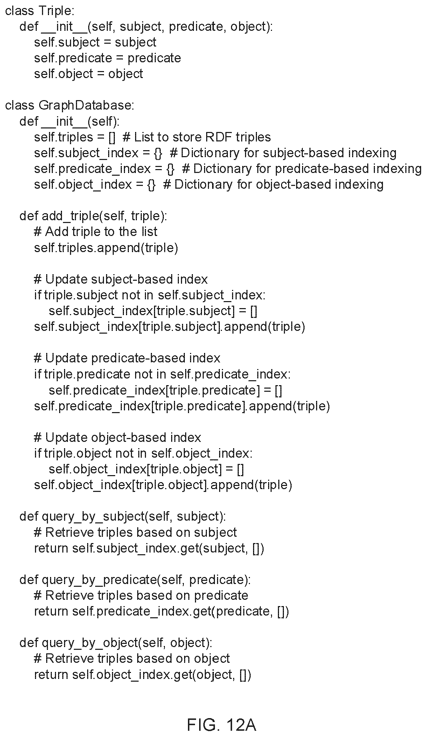

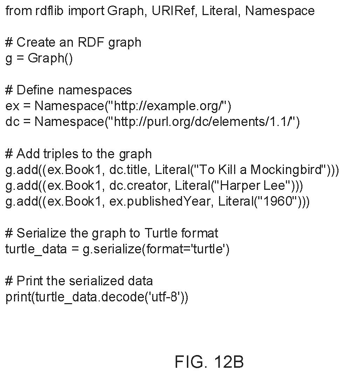

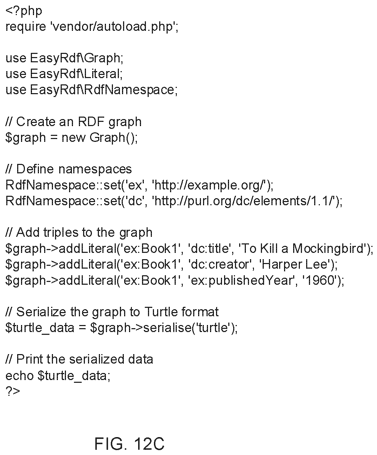

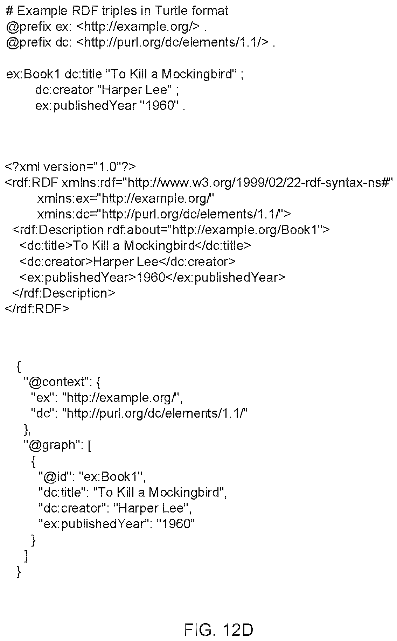

FIG. 12A provides a simple example of a class defining triples that can be used by an example graph database class. FIG. 12B provides an example of how a semantic web application, such as using Python with RDFLib, can create and use knowledge graphs. FIG. 12C provides an example of how a knowledge graph can be created and used using a content management system (in particular, using PHP with EasyRdf). FIG. 12D illustrates various examples of how graph information can be stored/serialized, particularly in Turtle, RDF/XML, and JSON formats.

### Example 9- Example Operations

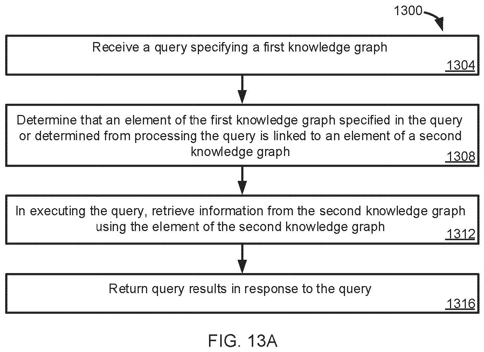

FIG. 13A is a flowchart of an example process 1300 of retrieving data from a second knowledge graph in response to a query of a first knowledge graph. At 1304, a query is received specifying a first knowledge graph. It is determined at 1308 that an element of the first knowledge graph specified in the query or it is determined from processing the query is linked to an element of a second knowledge graph. In executing the query, information from the second knowledge graph is retrieved at 1312 using the element of the second knowledge graph. Query results are returned in response to the query at 1316.

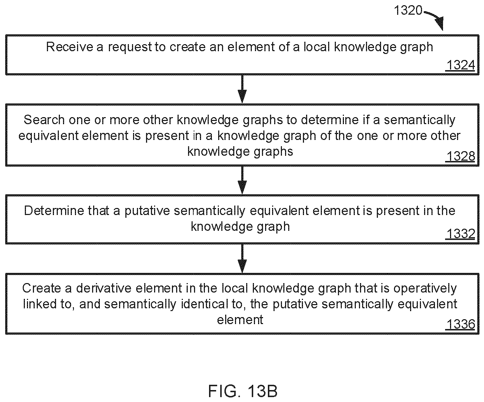

FIG. 13B is a flowchart of an example process 1320 of creating derivative elements in a local knowledge graph corresponding to elements of another knowledge graph. At 1324, a request is received to create an element of a local knowledge graph. One or more other knowledge graphs are searched at 1328 to determine if a semantically equivalent element is present in a knowledge graph of the one or more other knowledge graphs. At 1332, it is determined that a putative semantically equivalent element is present in the knowledge graph. A derivative element is created in the local knowledge graph at 1336 that is operatively linked to, and semantically identical to, the putative semantically equivalent element.

### Example 10- Additional Examples

Example 1 includes a computing system comprising at least one memory, one or more hardware processing units coupled to the at least one memory, and one or more computer-readable storage media storing computer-executable instructions that, when executed, cause the computing system to perform operations. These operations include receiving a query specifying a first knowledge graph, determining that an element of the first knowledge graph specified in the query or determined from processing the query is linked to an element of a second knowledge graph, retrieving information from the second knowledge graph using the element of the second knowledge graph in executing the query, and returning query results in response to the query.

Example 2 includes the subject matter of Example 1, adding that the element of the first knowledge graph is derived from the element of the second knowledge graph.

Example 3 includes the subject matter of Example 2, specifying further that the element of the first knowledge graph and the element of the second knowledge graph are semantically identical.

Example 4 includes the subject matter of Example 3, detailing that the element of the first knowledge graph and the element of the second knowledge graph share a common identifier.

Example 5 includes the subject matter of Example 4, specifying that the common identifier is defined in a first namespace for the first knowledge graph and in a second namespace for the second knowledge graph.

Example 6 includes the subject matter of any of Examples 1-5, wherein the operations further include receiving access credentials for a user submitting the query and determining that the user is authorized to access the second knowledge graph.

Example 7 includes the subject matter of any of Examples 1-6, specifying that the element of the first knowledge graph is linked to the element of a second knowledge graph using a tuple having Es of a subject, an object, and a predicate.

Example 8 is a method implemented in a computing system comprising at least one hardware processor and at least one memory. The method includes receiving a request to create an element of a local knowledge graph, searching one or more other knowledge graphs to determine if a semantically equivalent element is present in a knowledge graph of the one or more other knowledge graphs, determining that a putative semantically equivalent element is present in the knowledge graph, and creating a derivative element in the local knowledge graph that is operatively linked to, and semantically identical to, the putative semantically equivalent element.

Example 9 includes the subject matter of Example 8, specifying that the element of the local knowledge graph is a property.

Example 10 includes the subject matter of Example 8, specifying that the element of the local knowledge graph is a class.

Example 11 includes the subject matter of Example 8, specifying that the element of the local knowledge graph is a class instance.

Example 12 includes the subject matter of Example 11, adding operations that involve assigning a name of a class instance of the knowledge graph corresponding to the class instance to the class instance of the local knowledge graph and assigning an identifier of the class instance of the knowledge graph to the class instance of the local knowledge graph.

Example 13 includes the subject matter of any of Examples 8-12, detailing that the derivative element of the local knowledge graph is operatively linked to the semantically equivalent element by assigning a URI of the semantically equivalent element to the derivative element.

Example 14 includes the subject matter of any of Examples 8-13, wherein the operations further include receiving access credentials for a user submitting the request to create an element of the local knowledge graph and determining the one or more other knowledge graphs using the access credentials, where the one or more other knowledge graphs are a proper subset of a plurality of available knowledge graphs.

Example 15 includes the subject matter of any of Example 8-14, adding that in response to determining that a putative semantically equivalent element is present in the knowledge graph, the method displays to a user through a user interface an indication that the putative semantically equivalent element is present.

Example 16 includes the subject matter of Example 15, detailing further that it involves receiving user input approving the putative semantically equivalent element as semantically equivalent, and the creating of a derivative element is carried out in response to the user input.

Example 17 includes the subject matter of any of Examples 8-16, specifying that the element of the local knowledge graph is operatively linked to the putative semantically equivalent element using a tuple having Es of a subject, an object, and a predicate.

Example 18 includes one or more computer-readable storage media comprising computer-executable instructions that, when executed by a computing system comprising at least one hardware processor and at least one memory, cause the computing system to receive a request to create an element of a local knowledge graph, search one or more other knowledge graphs to determine if a semantically equivalent element is present in a knowledge graph of the one or more other knowledge graphs, determine that a putative semantically equivalent element is present in the knowledge graph, and create a derivative element in the local knowledge graph that is operatively linked to, and semantically identical to, the putative semantically equivalent element.

Example 19 includes the subject matter of Example 18, specifying that the element of the local knowledge graph can be a property, a class, or a class instance.

Example 20 includes the subject matter of Example 18 or Example 19, detailing that the derivative element of the local knowledge graph is operatively linked to the semantically equivalent element by assigning a URI of the semantically equivalent element to the derivative element.

### Example 11 - Computing Systems

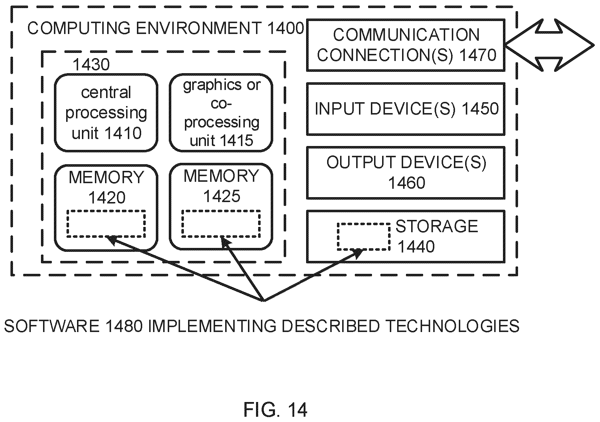

FIG. 14 depicts a generalized example of a suitable computing system 1400 in which the described innovations may be implemented. The computing system 1400 is not intended to suggest any limitation as to scope of use or functionality of the present disclosure, as the innovations may be implemented in diverse general-purpose or special-purpose computing systems.

With reference to FIG. 14, the computing system 1400 includes one or more processing units 1410, 1415 and memory 1420, 1425. In FIG. 14, this basic configuration 1430 is included within a dashed line. The processing units 1410, 1415 execute computer-executable instructions, such as for implementing technologies described in Examples 1-10. A processing unit can be a general-purpose central processing unit (CPU), processor in an application-specific integrated circuit (ASIC), or any other type of processor. In a multiprocessing system, multiple processing units execute computer-executable instructions to increase processing power. For example, FIG. 14 shows a central processing unit 1410 as well as a graphics processing unit or co-processing unit 1415. The tangible memory 1420, 1425 may be volatile memory (e.g., registers, cache, RAM), non-volatile memory (e.g., ROM, EEPROM, flash memory, etc.), or some combination of the two, accessible by the processing unit(s) 1410, 1415. The memory 1420, 1425 stores software 1480 implementing one or more innovations described herein, in the form of computer-executable instructions suitable for execution by the processing unit(s) 1410, 1415.

A computing system 1400 may have additional features. For example, the computing system 1400 includes storage 1440, one or more input devices 1450, one or more output devices 1460, and one or more communication connections 1470. An interconnection mechanism (not shown) such as a bus, controller, or network interconnects the components of the computing system 1400. Typically, operating system software (not shown) provides an operating environment for other software executing in the computing system 1400, and coordinates activities of the components of the computing system 1400.

The tangible storage 1440 may be removable or non-removable, and includes magnetic disks, magnetic tapes or cassettes, CD-ROMs, DVDs, or any other medium which can be used to store information in a non-transitory way, and which can be accessed within the computing system 1400. The storage 1440 stores instructions for the software 1480 implementing one or more innovations described herein.

The input device(s) 1450 may be a touch input device such as a keyboard, mouse, pen, or trackball, a voice input device, a scanning device, or another device that provides input to the computing system 1400. The output device(s) 1460 may be a display, printer, speaker, CD-writer, or another device that provides output from the computing system 1400.

The communication connection(s) 1470 enable communication over a communication medium to another computing entity. The communication medium conveys information such as computer-executable instructions, audio or video input or output, or other data in a modulated data signal. A modulated data signal is a signal that has one or more of its characteristics set or changed in such a manner as to encode information in the signal. By way of example, and not limitation, communication media can use an electrical, optical, RF, or other carrier.

The innovations can be described in the general context of computer-executable instructions, such as those included in program modules, being executed in a computing system on a target real or virtual processor. Generally, program modules or components include routines, programs, libraries, objects, classes, components, data structures, etc. that perform particular tasks or implement particular abstract data types. The functionality of the program modules may be combined or split between program modules as desired in various embodiments. Computer-executable instructions for program modules may be executed within a local or distributed computing system.

The terms "system" and "device" are used interchangeably herein. Unless the context clearly indicates otherwise, neither term implies any limitation on a type of computing system or computing device. In general, a computing system or computing device can be local or distributed, and can include any combination of special-purpose hardware and/or general-purpose hardware with software implementing the functionality described herein.

In various examples described herein, a module (e.g., component or engine) can be "coded" to perform certain operations or provide certain functionality, indicating that computer-executable instructions for the module can be executed to perform such operations, cause such operations to be performed, or to otherwise provide such functionality. Although functionality described with respect to a software component, module, or engine can be carried out as a discrete software unit (e.g., program, function, class method), it need not be implemented as a discrete unit. That is, the functionality can be incorporated into a larger or more general-purpose program, such as one or more lines of code in a larger or general-purpose program.

For the sake of presentation, the detailed description uses terms like "determine" and "use" to describe computer operations in a computing system. These terms are high-level abstractions for operations performed by a computer, and should not be confused with acts performed by a human being. The actual computer operations corresponding to these terms vary depending on implementation.

### Example 12 - Cloud Computing Environment

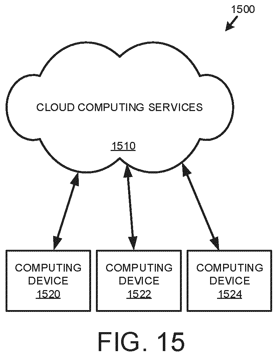

FIG. 15 depicts an example cloud computing environment 1500 in which the described technologies can be implemented. The cloud computing environment 1500 comprises cloud computing services 1510. The cloud computing services 1510 can comprise various types of cloud computing resources, such as computer servers, data storage repositories, networking resources, etc. The cloud computing services 1510 can be centrally located (e.g., provided by a data center of a business or organization) or distributed (e.g., provided by various computing resources located at different locations, such as different data centers and/or located in different cities or countries).

The cloud computing services 1510 are utilized by various types of computing devices (e.g., client computing devices), such as computing devices 1520, 1522, and 1524. For example, the computing devices (e.g., 1520, 1522, and 1524) can be computers (e.g., desktop or laptop computers), mobile devices (e.g., tablet computers or smart phones), or other types of computing devices. For example, the computing devices (e.g., 1520, 1522, and 1524) can utilize the cloud computing services 1510 to perform computing operators (e.g., data processing, data storage, and the like).

### Example 13 - Implementations

Although the operations of some of the disclosed methods are described in a particular, sequential order for convenient presentation, it should be understood that this manner of description encompasses rearrangement, unless a particular ordering is required by specific language set forth below. For example, operations described sequentially may in some cases be rearranged or performed concurrently. Moreover, for the sake of simplicity, the attached figures may not show the various ways in which the disclosed methods can be used in conjunction with other methods.

Any of the disclosed methods can be implemented as computer-executable instructions or a computer program product stored on one or more computer-readable storage media, such as tangible, non-transitory computer-readable storage media, and executed on a computing device (e.g., any available computing device, including smart phones or other mobile devices that include computing hardware). Tangible computer-readable storage media are any available tangible media that can be accessed within a computing environment (e.g., one or more optical media discs such as DVD or CD, volatile memory components (such as DRAM or SRAM), or nonvolatile memory components (such as flash memory or hard drives)). By way of example, and with reference to FIG. 14, computer-readable storage media include memory 1420 and 1425, and storage 1440. The term computer-readable storage media does not include signals and carrier waves. In addition, the term computer-readable storage media does not include communication connections (e.g., 1470).

Any of the computer-executable instructions for implementing the disclosed techniques as well as any data created and used during implementation of the disclosed embodiments can be stored on one or more computer-readable storage media. The computer-executable instructions can be part of, for example, a dedicated software application or a software application that is accessed or downloaded via a web browser or other software application (such as a remote computing application). Such software can be executed, for example, on a single local computer (e.g., any suitable commercially available computer) or in a network environment (e.g., via the Internet, a wide-area network, a local-area network, a client-server network (such as a cloud computing network), or other such network) using one or more network computers.

For clarity, only certain selected aspects of the software-based implementations are described. Other details that are well known in the art are omitted. For example, it should be understood that the disclosed technology is not limited to any specific computer language or program. For instance, the disclosed technology can be implemented by software written in C, C++, C#, Java, Perl, JavaScript, Python, R, Ruby, ABAP, SQL, XCode, GO, Adobe Flash, or any other suitable programming language, or, in some examples, markup languages such as html or XML, or combinations of suitable programming languages and markup languages. Likewise, the disclosed technology is not limited to any particular computer or type of hardware. Certain details of suitable computers and hardware are well known and need not be set forth in detail in this disclosure.

Furthermore, any of the software-based embodiments (comprising, for example, computer-executable instructions for causing a computer to perform any of the disclosed methods) can be uploaded, downloaded, or remotely accessed through a suitable communication means. Such suitable communication means include, for example, the Internet, the World Wide Web, an intranet, software applications, cable (including fiber optic cable), magnetic communications, electromagnetic communications (including RF, microwave, and infrared communications), electronic communications, or other such communication means.

The disclosed methods, apparatus, and systems should not be construed as limiting in any way. Instead, the present disclosure is directed toward all novel and nonobvious features and aspects of the various disclosed embodiments, alone and in various combinations and sub combinations with one another. The disclosed methods, apparatus, and systems are not limited to any specific aspect or feature or combination thereof, nor do the disclosed embodiments require that any one or more specific advantages be present, or problems be solved.

The technologies from any example can be combined with the technologies described in any one or more of the other examples. In view of the many possible embodiments to which the principles of the disclosed technology may be applied, it should be recognized that the illustrated embodiments are examples of the disclosed technology and should not be taken as a limitation on the scope of the disclosed technology. Rather, the scope of the disclosed technology includes what is covered by the scope and spirit of the following claims.

## Claims

1. A computing system comprising:
at least one memory;
one or more hardware processing units coupled to the at least one memory; and
one or more computer readable storage media storing computer-executable instructions that, when executed, cause the computing system to perform operations comprising:
receiving a query specifying a first knowledge graph;
determining that an element of the first knowledge graph specified in the query or determined from processing the query is linked to an element of a second knowledge graph;
in executing the query, retrieving information from the second knowledge graph using the element of the second knowledge graph; and
returning query results in response to the query.

2. The computing system of claim 1, wherein the element of the first knowledge graph is derived from the element of the second knowledge graph.

3. The computing system of claim 2, wherein the element of the first knowledge graph and the element of the second knowledge graph are semantically identical.

4. The computing system of claim 3, wherein the element of the first knowledge graph and the element of the second knowledge graph share a common identifier;
wherein the common identifier may be specified in a first namespace for the first knowledge graph, and optionally, wherein the common identifier may be specified in a second namespace for the second knowledge graph.

5. The computing system of any one of the preceding claims, the operations further comprising:
receiving access credentials for a user submitting the query; and
determining that the user is authorized to access the second knowledge graph;
wherein the element of the first knowledge graph may be linked to the element of a second knowledge graph using a tuple having elements of a subject, an object, and a predicate.

6. A method, implemented in a computing system comprising at least one hardware processor and at least one memory coupled to the at least one hardware processor, the method comprising:
receiving a request to create an element of a local knowledge graph;
searching one or more other knowledge graphs to determine if a semantically equivalent element is present in a knowledge graph of the one or more other knowledge graphs;
determining that a putative semantically equivalent element is present in the knowledge graph; and
creating a derivative element in the local knowledge graph that is operatively linked to, and semantically identical to, the putative semantically equivalent element.

7. The method of claim 6, wherein the element of the local knowledge graph is a property or a class.

8. The method of claim 6 or 7, wherein the element of the local knowledge graph is a class instance; wherein the method may further comprise:
assigning a name of a class instance of the knowledge graph corresponding to the class instance to the class instance of the local knowledge graph; and
assigning an identifier of the class instance of the knowledge graph to the class instance of the local knowledge graph.

9. The method of any one of claims 6 to 8, wherein the derivative element of the local knowledge graph is operatively linked to the putative semantically equivalent element by assigning a URI of the putative semantically equivalent element to the derivative element.

10. The method of any one of claims 6 to 9, further comprising:
receiving access credentials for a user submitting the request to create an element of the local knowledge graph; and
determining the one or more other knowledge graphs using the access credentials, wherein the one or more other knowledge graphs are a proper subset of a plurality of available knowledge graphs.

11. The method of any one of claims 6 to 10, further comprising:
in response to determining that a putative semantically equivalent element is present in the knowledge graph, displaying to a user through a user interface an indication that the putative semantically equivalent element is present;
wherein the method may further comprise:
receiving user input approving the putative semantically equivalent element as semantically equivalent, wherein the creating a derivative element is carried out in response to the user input.

12. The method of any one of claims 6 to 11, wherein the element of the local knowledge graph is operatively linked to the putative semantically equivalent element using a tuple having elements of a subject, an object, and a predicate.

13. One or more computer-readable storage media comprising:
computer-executable instructions that, when executed by a computing system comprising at least one hardware processor and at least one memory coupled to the at least one hardware processor, cause the computing system to receive a request to create an element of a local knowledge graph;
computer-executable instructions that, when executed by the computing system, cause the computing system to search one or more other knowledge graphs to determine if a semantically equivalent element is present in a knowledge graph of the one or more other knowledge graphs;
computer-executable instructions that, when executed by the computing system, cause the computing system to determine that a putative semantically equivalent element is present in the knowledge graph; and
computer-executable instructions that, when executed by the computing system, cause the computing system to create a derivative element in the local knowledge graph that is operatively linked to, and semantically identical to, the putative semantically equivalent element.

14. The one or more computer-readable storage media of claim 13, wherein the element of the local knowledge graph is a property, a class, or a class instance.

15. The one or more computer-readable storage media of claim 13 or 14, wherein the derivative element of the local knowledge graph is operatively linked to the semantically equivalent element by assigning a URI of the semantically equivalent element to the derivative element.
